# EUROPEAN PATENT APPLICATION

(11) **EP 4 447 178 A2**
(43) Date of publication of application: **16.10.2024**
(21) Application number: 24169185.6
(22) Date of filing: 09.04.2024
(51) Int. Cl.: H01M 10/0525, H01M 10/0567, H01M 10/0568, H01M 10/0569

(54) **ELECTROLYTE, ENERGY STORAGE DEVICE, ENERGY STORAGE MODULE, AND ELECTRIC APPARATUS**

(30) Priority: 12.04.2023 CN 202310387200
(71) Applicant: Xiamen Hithium Energy Storage Technology Co., Ltd., Xiamen, Fujian 361100 (CN)
(72) Inventor: Zhou, Wenyang, Xiamen, 361100 (CN)
(74) Representative: Habermann, Hruschka & Schnabel

(57) **Abstract**

The present application relates to the field of energy storage technology, and particularly, to an electrolyte, an energy storage device, an energy storage module, and an electric apparatus. The electrolyte for the energy storage device satisfies: 23.1≤15×c²+28.53×c+0.64×µ+16.47×ρ-σ≤25.3, where c is a value of a concentration of lithium salt in the electrolyte, ranging from 0.6 to 1 mol/L; µ is a value of a viscosity of the electrolyte at 25°C, ranging from 1.6 to 3.0 mPa.s; ρ is a value of a density of the electrolyte, ranging from 1.1 to 1.3 g/cm³; and σ is a value of a conductivity of the electrolyte, ranging from 8 to 12 ms/cm. By controlling the conductivity, viscosity, and density, and lithium salt concentration of the electrolyte to satisfy the above ranges and relational expression, an electrolyte with optimal performance can be rapidly developed in a short time with less raw materials, ensuring the electrolyte to have improved electrical property, good process performance, and reasonable production cost at the same time.

## Description

### FIELD

The present disclosure relates to the technical field of energy storage, and more particularly, to an electrolyte, an energy storage device, an energy storage module, and an electric apparatus.

### BACKGROUND

Currently, in the process of developing an electrolyte, a lot of time is required to prepare and test different formulas, which is time-consuming and raw material-intensive. In addition, the developed electrolyte has to balance electrical property, process performance, and production cost by compromising these three indexes to certain extent. For example, in order to improve the electrical property of the electrolyte, process requirements for the electrolyte are often higher, which also leads to an increase in production cost. In turn, in order to ensure better process performance, the electrical property of the electrolyte can hardly be improved, and a breakthrough of a certain performance index can hardly be achieved. Consequently, it difficult to further improve related performances of the energy storage device. Therefore, the only way to balance the electrical property, process performance, and cost of the electrolyte is to compromise these three indexes to certain extent.

In other words, the existing electrolyte can hardly meet the requirements of improving electrical property, having good process performance, and appropriate cost at the same time. In particular, it is difficult to develop an electrolyte satisfying the above requirements with less time, less materials, and low cost.

### SUMMARY

In view of the above technical problem, the present disclosure provides an electrolyte, an energy storage device, an energy storage module, and an electric apparatus, to solve the problem that the electrolyte can hardly be improved in terms of the electrical property while ensuring good process performance and low cost.

In a first aspect, embodiments of the present disclosure provide an electrolyte for an energy storage device. The electrolyte satisfies the following relational expression: 23.1≤-15×c²+28.53×c+0.64×µ+16.47×ρ-σ≤25.3, where:
c is a value of a concentration of lithium salt in the electrolyte, the concentration of the lithium salt ranging from 0.6 mol/L to 1 mol/L;
µ is a value of a viscosity of the electrolyte at 25°C, the viscosity of the electrolyte at 25°C ranging from 1.6 mPa.s to 3.0 mPa.s;
ρ is a value of a density of the electrolyte, the density of the electrolyte ranging from 1.1 g/cm³ to 1.3 g/cm³; and
σ is a value of a conductivity of the electrolyte, the conductivity ranging from 8 ms/cm to 12 ms/cm.

Further, the conductivity ranges from 8 ms/cm to 8.9 ms/cm.

Further, the electrolyte further includes an organic solvent and an additive. A mass percentage of the additive in the electrolyte ranges from 1 wt% to 8 wt%, and a mass percentage of the organic solvent in the electrolyte ranges from 50 wt% to 95 wt%.

Further, the lithium salt includes at least one of lithium hexafluorophosphate, lithium bis(trifluoromethanesulfonyl)imide, lithium bis(fluorosulfonyl)imide, lithium tetrafluoroborate, lithium bis(oxalato)borate, or lithium difluoroxalate borate.

Further, the organic solvent includes a cyclic organic solvent and/or a linear organic solvent. When the organic solvent includes the cyclic organic solvent, the cyclic organic solvent includes at least one of ethylene carbonate, propylene carbonate, dioxolane, or sulfolane. When the organic solvent includes the linear organic solvent, the linear organic solvent includes at least one of dimethyl carbonate, diethyl carbonate, ethyl methyl carbonate, ethyl acetate, methyl acetate, propyl propionate, ethyl butyrate, ethyl propionate, 1,2-dimethoxyethane, diethylene glycol dimethyl ether, tetramethylsilane, or adiponitrile.

Further, the organic solvent includes the cyclic organic solvent and the linear organic solvent, and a mass ratio of the cyclic organic solvent to the linear organic solvent ranges from 0.05 to 2.

Further, the additive includes at least one of vinylene carbonate, fluoroethylene carbonate, 1,3-propanesultone, vinyl sulfate, tris(trimethylsilyl)phosphate, tris(trimethylsilyl)borate, methylene methanedisulfonate, vinylethylene carbonate, lithium bisoxalate borate, lithium difluoroxalate borate, or lithium difluorophosphate.

In a second aspect, embodiments of the present disclosure provide an energy storage device including the electrolyte according to the first aspect.

In a third aspect, the present disclosure provides an energy storage module including a container and the energy storage device according to the second aspect arranged in the container.

In a fourth aspect, embodiments of the present disclosure provide an electric apparatus including an electric apparatus body and the energy storage device according to the second aspect arranged in the electric apparatus body. The energy storage device is configured to supply power to the electric apparatus body.

Compared with the related art, the present disclosure has the following beneficial effects.

By controlling the conductivity, viscosity, density, and lithium salt concentration of the electrolyte to satisfy the above-mentioned ranges and relational expression, the embodiments of the present disclosure can rapidly develop an electrolyte with optimal performance with less time and raw materials, ensuring that the electrolyte has improved electrical property, good process performance, and reasonable production cost.

On the one hand, the value of the conductivity of the electrolyte can be quickly determined based on the preset values of the viscosity, density, and concentration of the lithium salt of the electrolyte. Since the conductivity has an important impact on internal resistance and rate performance of the energy storage device, it can be recognized based on the determined value of the conductivity of the electrolyte whether the developed electrolyte has better electrical property, thereby quickly determining in advance whether the electrolyte developed based on the above values of the viscosity, density, conductivity, and lithium salt concentration of the electrolyte has good performance. On the other hand, since the values of the viscosity, density, conductivity, and lithium salt concentration of the developed electrolyte are all within the range of the embodiments of the present disclosure, it can be ensured that the developed electrolyte has not only better electrical property but good process performance and reasonable production cost.

### BRIEF DESCRIPTION OF THE DRAWINGS

In order to clearly illustrate technical solutions of embodiments of the present disclosure, drawings used in embodiments are briefly described below. The drawings described below only illustrate a part of the embodiments of the present disclosure. Those skilled in the art can obtain other drawings based on these drawings without creative labor.

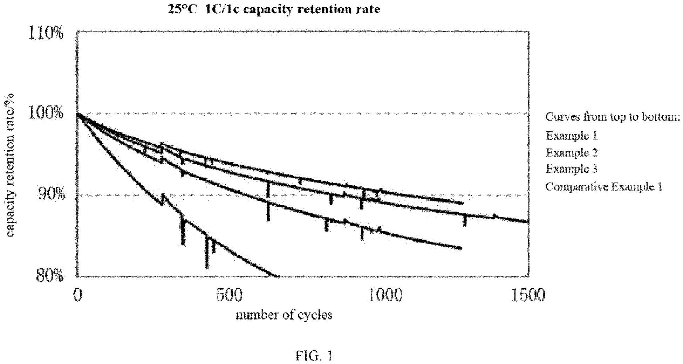

FIG. 1 is a diagram of cycle performances of batteries using the electrolyte according to Example 1 to Example 3 of the present disclosure and Comparative Example 1.

### DESCRIPTION OF EMBODIMENTS

Referring the accompanying drawing in the embodiments of the present disclosure, technical solutions in the embodiments of the present disclosure are clearly and thoroughly described below. The embodiments described herein are merely a part of the embodiments of the present disclosure, rather than all embodiments of the present disclosure. Based on the embodiments of the present disclosure, other embodiments obtained by those skilled in the art without creative labor are within scope of the present disclosure.

In the present disclosure, the orientation or position relationship indicated by the terms "on", "under", "left", "right", "front", "rear", "top", "bottom", "inner", "outer", "center", "vertical", "horizontal", "transverse", "longitudinal", and the like is based on the orientation or position relationship shown in the drawings. These terms are only for well describing the present disclosure and the embodiments thereof, rather than limiting that the illustrated device, element, or components must have a specific orientation, or be constructed and operated in a specific orientation.

Moreover, some of the above-mentioned terms may be used to indicate other meanings in addition to the orientation or position relationship. For example, the term "on" may also be used to indicate a certain dependence relationship or connection relationship in some cases. For those of ordinary skill in the art, the specific meaning of these terms in the present disclosure can be understood according to specific circumstances.

In addition, terms such as "install", "arrange", "provide with", "connect to", "connect with", and the like should be understood in a broad sense. For example, they may indicate a fixed connection or a detachable connection or connection as one piece; mechanical connection or electrical connection; direct connection or indirect connection through an intermediate; or internal communication between two devices, elements, or components. For those of ordinary skill in the art, the specific meaning of the above-mentioned terms in the present disclosure can be understood according to specific circumstances.

In addition, the terms "first", "second", etc. are mainly used to distinguish different devices, elements, or components (specific types and structures may be the same or different), rather than indicating or implying relative importance or number of the indicated devices, elements, or components. Unless otherwise stated, "plurality of" means two or more.

The technical solutions of the present disclosure will be further described below with reference to the embodiments and the accompanying drawing.

For an energy storage device such as a lithium battery, in addition to a positive electrode plate and a negative electrode plate, the electrolyte also has important impact on the product performance energy storage device. In the related art, a development process of the electrolyte not only requires a lot of time and a lot of reagents and raw materials to prepare the formula, but also requires more performance tests to confirm whether the formula meets the requirements. However, despite long cycle, time-consuming, and raw material-intensive exploratory formula development, the results thereof are often highly uncertain, such that the developed electrolyte can hardly have both high electrical property and high process performance as well as reasonable production cost at the same time. Therefore, according to the practice in the related art, the three factors, i.e., the electrical property, process performance, and production cost of the electrolyte have to be compromised to a certain extent, that is, an electrolyte having suitable electrical property, process performance satisfying production requirements, and production cost that is not excessively high is developed to satisfy the demand. However, this leads to an obvious bottleneck in improving the electrical property index of the electrolyte. In addition, it is difficult to further improve the electrical property while satisfying the process performance and the production cost, thereby causing difficulty in further improving the electrical property of the energy storage device.

For example, if a charge-discharge rate performance of the energy storage device is enhanced by increasing the concentration of the lithium salt, the conductivity of the electrolyte as well as the viscosity of the electrolyte are increased with an increase in the concentration of lithium salt. The increased viscosity of the electrolyte, on the one hand, may affect the process performance of the electrolyte, making injection effect and infiltration effect worse. On the other hand, when the viscosity of the electrolyte increases to a certain extent, it will instead lead to a decrease in the conductivity. In this regard, the electrical property and the process performance of the electrolyte are two properties that are difficult to balance. In addition, the increasing of the lithium salt concentration will also increase the cost of the electrolyte due to the increased amount of the lithium salt.

Based on the above analysis, it is difficult in the related art to quickly develop an optimal electrolyte in a short time and with few raw materials, and thus the electrical property of the electrolyte can hardly be improved while the electrolyte has suitable process performance and production cost.

The embodiments of the present disclosure provide an electrolyte for an energy storage device, an energy storage device, an energy storage module, and an electric apparatus. By creatively exploring the specific parameter ranges and specific relationship of the conductivity, density, viscosity, and lithium salt concentration of the electrolyte to be satisfied, an electrolyte with more suitable performance can be quickly developed, and the electrical property can be improved while ensuring good process performance and low production cost.

In a first aspect, the embodiments of the present disclosure provide an electrolyte for an energy storage device. The electrolyte satisfies the following relational expression: 23.1≤-15×c²+28.53×c+0.64×µ+16.47×ρ-σ≤25.3, where:
c is a value of a concentration of lithium salt in the electrolyte, the concentration of the lithium salt ranging from 0.6 mol/L to 1 mol/L;
µ is a value of a viscosity of the electrolyte at 25°C, the viscosity of the electrolyte at 25°C ranging from 1.6 mPa.s to 3.0 mPa.s;
ρ is a value of a density of the electrolyte, the density of the electrolyte ranging from 1.1 g/cm³ to 1.3 g/cm³; and
σ is a value of a conductivity of the electrolyte, the conductivity ranging from 8 ms/cm to 12 ms/cm.

It can be noted that, in the calculation process of the above relational expression, values of the lithium salt concentration, the viscosity, the density, and the conductivity involve in the calculation, and physical units do not involve.

By controlling the conductivity, viscosity, density, and lithium salt concentration of the electrolyte to satisfy the above-mentioned ranges and relational expression, the embodiments of the present disclosure can quickly develop an electrolyte with optimal performance with less time and raw materials, ensuring that the electrolyte has improved electrical property, good process performance, and reasonable production cost.

On the one hand, the value of the conductivity of the electrolyte can be quickly determined based on the preset values of the viscosity, density, and concentration of the lithium salt of the electrolyte. Since the conductivity has an important impact on internal resistance and rate performance of the energy storage device, it can be recognized based on the determined value of the conductivity of the electrolyte whether the developed electrolyte has better electrical property, thereby quickly determining in advance whether the electrolyte developed based on the above values of the viscosity, density, conductivity, and lithium salt concentration of the electrolyte has good performance. In other words, unlike the technical solutions known in the related art, in which the formula is required to be tried first and the performance is then tested to evaluate the rationality of formula development, according to the embodiments of the present disclosure, it can be first quickly determined whether the developed electrolyte with specific values of the viscosity, density, conductivity, and lithium salt concentration has better performance based on the relational expression of 23.1≤-15×c²+28.53×c+0.64×µ+16.47×ρ-σ≤25.3; and then the specific formula of the electrolyte with better performance is determined. Regarding the electrolyte that does not have promising performance, the formula thereof is no longer needed to spend time and reagents on the development. In this way, the electrolyte with reasonable performance can be developed more quickly and more accurately.

In an embodiment of the present disclosure, the conductivity is calculated based on the preset values of the viscosity, density, and lithium salt concentration of the electrolyte in accordance with the above relational expression. After quickly determining that the developed electrolyte according to the above values of the four parameter has good performance, the concentration of the lithium salt required for the electrolyte formula can first be determined, then the type of the lithium salt can be determined and the corresponding concentration of the lithium salt can be calculated. Thereafter, an electrolyte formula satisfying the above requirements on the conductivity, density, and viscosity can be obtained by selecting appropriate organic solvents and additives.

On the other hand, since the values of the viscosity, density, conductivity, and lithium salt concentration of the developed electrolyte are all within the ranges according to the embodiments of the present disclosure, it can be ensured that the developed electrolyte has not only better electrical property, but also good process performance and reasonable production cost.

The concentration of the lithium salt in the electrolyte ranges from 0.6 mol/L to 1 mol/L, including any point value within the range. For example, the concentration of the lithium salt can be 0.6 mol/L, 0.7 mol/L, 0.8 mol/L, 0.9 mol/L, or 1 mol/L. The above range of the concentration of the lithium salt is conducive to allowing the conductivity and the viscosity of the entire electrolyte formula to reach the corresponding range. In the above range, the concentration of the lithium salt will not be too low, resulting in low conductivity; the concentration of the lithium salt will not be too high, resulting in the problems such excessively great viscosity of the electrolyte and crystallization of the lithium salt, thereby causing decreased conductivity. In addition, since the concentration of the above lithium salt is not high, the development of the formula does not require a large amount of expensive lithium salt, thereby advantageously further reducing the production cost.

The viscosity of the electrolyte is controlled to range from 1.6 mPa.s to 3.0 mPa.s at 25°C, including any point value within the range. For example, the viscosity of the electrolyte at 25°C can be 1.6 mPa.s, 1.8 mPa.s, 2 mPa.s, 2.2 mPa.s, 2.5 mPa.s, 2.8 mPa.s, or 3 mPa.s. Within the above range of the viscosity, the electrolyte has good fluidity, which is conducive to reducing a contact angle between the electrolyte and the positive electrode plate and a contact angle between the electrolyte and the negative electrode plate, allowing the electrolyte to have better infiltration performance for the positive electrode plate and the negative electrode plate. In addition, when the electrolyte is injected into the battery cell of the energy storage device, the above range of the viscosity of the electrolyte is also conducive to reducing the occurrence of liquid spray, overflow, and other phenomena, and thus the electrolyte exhibits good process performance of the electrolyte.

It can be understood that the process performance of the electrolyte in the embodiments of the present disclosure refers to the performance characteristics exhibited during the production process of the energy storage device using the electrolyte. For example, the process performance of the electrolyte may be reflected in the injection effect during the injection of the electrolyte into the battery cell, the infiltration ability of the electrolyte to the electrode plate, and so on.

The density of the electrolyte ranges from 1.1 g/cm³ to 1.3 g/cm³, including any point value within the range of values. For example, the density of the electrolyte can be 1.1 g/cm³, 1.15 g/cm³, 1.2 g/cm³, 1.25 g/cm³, or 1.3 g/cm³. Within this range of the density, without additionally replenishing more electrolyte, the effect of filling the electrolyte into a battery cell as well as the sufficient infiltration of the electrolyte to the electrode plate can be ensured, thereby improving the electrical property of the energy storage device in terms of capacity, cycle life, and other aspects. In another embodiment of the present disclosure, when small amount of the electrolyte is injected into a battery cell, the battery cell tends to have some areas that are not filled with the electrolyte, resulting in problems such as black spots on the electrode plates, insufficient utilization of the capacity of the battery cell, and a sharp decline in capacity during cycle charge and discharge of the battery. Although the above problems can be improved by increasing the amount of the injected electrolyte, the cost of the energy storage device is higher when more electrolyte is added, due to the expensive price of the electrolyte. The density of the electrolyte in the embodiments of the present disclosure is relatively low. That is to say, when the same mass of the electrolyte is added, the electrolyte according to the embodiments of the present disclosure has a larger volume and has more filling areas in the battery cell, and it can fill internal space of the battery cell more fully. In this way, it can be ensured that the electrode plates are fully infiltrated in the electrolyte, without additionally increasing the amount of the electrolyte and the production cost. Thus, the capacity of the electrode plate can be fully utilized, and the cycle charge and discharge life of the battery can be advantageously prolonged.

The conductivity of the electrolyte ranges from 8 ms/cm to 12.0 ms/cm, including any point value within the range. For example, the conductivity of the electrolyte can be 8 ms/cm, 9 ms/cm, 10 ms/cm, 11 ms/cm, or 12 ms/cm. The conductivity with in the above range is beneficial for the energy storage device to have good charge-discharge rate performance.

The conductivity greater than or equal to 9 ms/cm belongs to high conductivity, which has a positive influence on the charge-discharge rate performance of the energy storage device. However, when the conductivity is smaller than 9 ms/cm, the electrolyte can also be quickly developed by regulating the relation of the viscosity, density, conductivity, and lithium salt concentration of the electrolyte according to the embodiments of the present disclosure, thereby obtaining the electrolyte with better electrical property.

In an alternative embodiment, the conductivity of the electrolyte in the embodiments of the present disclosure ranges from 8 ms/cm to 8.9 ms/cm. Compared with a conductivity greater than 9 ms/cm, the conductivity between 8 ms/cm and 8.9 ms/cm is relatively low. Different from the related art in which a low conductivity of the electrolyte results in poor electrical performance of the electrolyte, although a relatively low conductivity is adopted in the embodiments of the present disclosure, the electrolyte with better electrical property, reasonable process performance, and production cost can still be obtained.

Further, the electrolyte includes the above lithium salt, an organic solvent, and an additive. The mass percentage of the additive in the electrolyte ranges from 1 wt% to 8 wt%, and the mass percentage of the organic solvent in the electrolyte ranges from 50 wt% to 95 wt%. By controlling the contents of the organic solvent and the additive within the above ranges, and in combination with the concentration of the lithium salt that has been quickly determined, the required dosage of each component of the electrolyte can be quickly and reasonably determined, thereby advantageously controlling and obtaining corresponding performance parameters such as the viscosity and density of the electrolyte, allowing the viscosity of the electrolyte at 25°C to be in the range of 1.6 mPa.s to 3.0 mPa.s, and the density of the electrolyte tin the range of 1.1 g/cm³ to 1.3 g/cm³.

The mass percentage of the additive in the electrolyte ranges from 1 wt% to 8 wt%, including any point value within the range. For example, the mass percentage of the additive in the electrolyte can be 1 wt%, 2 wt%, 3 wt%, 4 wt%, 5 wt%, 6 wt%, 7 wt%, or 8 wt%. The mass percentage of the organic solvent in the electrolyte ranges from 50 wt% to 95 wt%, including any point value within the range. For example, the mass percentage of the organic solvent in the electrolyte can be 50 wt%, 60 wt%, 65 wt%, 70 wt %, 80 wt%, 90 wt%, or 95 wt%.

The materials of each component in the electrolyte are described below.

In an embodiment of the present disclosure, the lithium salt includes at least one of lithium hexafluorophosphate, lithium bis(trifluoromethanesulfonyl)imide, lithium bis(fluorosulfonyl)imide, lithium tetrafluoroborate, lithium bis(oxalato)borate, or lithium difluoroxalate borate.

In an embodiment of the present disclosure, the organic solvent includes a cyclic organic solvent and/or a linear organic solvent. When the organic solvent includes the cyclic organic solvent, the cyclic organic solvent includes at least one of ethylene carbonate, propylene carbonate, dioxolane, or sulfolane. When the organic solvent includes the linear organic solvent, the linear organic solvent includes at least one of dimethyl carbonate, diethyl carbonate, ethyl methyl carbonate, ethyl acetate, methyl acetate, propyl propionate, ethyl butyrate, ethyl propionate, 1,2-dimethoxyethane, diethylene glycol dimethyl ether, tetramethylsilane, or adiponitrile.

Preferably, the organic solvent includes the cyclic organic solvent and the linear organic solvent, and a mass ratio of the cyclic organic solvent to the linear organic solvent ranges from 0.05 to 2.

In an embodiment of the present disclosure, the additive includes at least one of vinylene carbonate, fluoroethylene carbonate, 1,3-propanesultone, vinyl sulfate, tris(trimethylsilyl)phosphate, tris(trimethylsilyl)borate, methylene methanedisulfonate, vinylethylene carbonate, lithium bisoxalate borate, lithium difluoroxalate borate, or lithium difluorophosphate.

The electrolyte in the embodiments of the present disclosure adopts the above component materials, allowing the electrolyte to have wider versatility. The electrolyte can be adapted to a variety of different positive and negative electrode material systems while satisfying superior electrical property, stable process performance, and low cost.

In a second aspect, the embodiments of the present disclosure further provide an energy storage device. The energy storage device includes the electrolyte according to the first aspect. The energy storage device may be a lithium battery. The energy storage device further includes a positive electrode plate, a negative electrode plate, and a separator. The separator is arranged between the positive electrode plate and the negative electrode plate. The positive electrode plate, the negative electrode plate, and the separator are assembled to form a battery cell. The electrolyte is configured to inject liquid into the battery cell and infiltrate the positive electrode plate and the negative electrode plate.

In an embodiment of the present disclosure, the energy storage device is a square shell energy storage device, a cylindrical energy storage device, or a soft package energy storage device.

In a third aspect, the embodiments of the present disclosure further provide an energy storage module. The energy storage module includes a container and the energy storage device according to the second aspect arranged in the casing. A plurality of energy storage devices is received in the container. A connection method of the plurality of energy storage devices includes at least one of series connection and parallel connection. The energy storage module plays a role in fixing and protecting the energy storage device.

In a fourth aspect, the embodiments of the present disclosure further provide an electric apparatus. The electric apparatus may be an energy storage base station, an electric vehicle, a ship, a passenger car, and the like. The electric apparatus includes an electric apparatus body and the energy storage device according to the second aspect arranged in the electric apparatus body. The energy storage device is configured to supply power to the electric apparatus body. The electric apparatus body includes a positive electrode of the apparatus and a negative electrode of the apparatus. The positive electrode plate of the energy storage device is electrically connected to the positive electrode of the apparatus, and the negative electrode plate is electrically connected to the negative electrode of the apparatus.

The electrolyte, the energy storage device, the energy storage module, and the electric apparatus in the embodiments of the present disclosure will be further described below with reference to more specific embodiments.

### Example 1

Example 1 provided an electrolyte for an energy storage device. The electrolyte included lithium salt, an organic solvent, and an additive. The lithium salt was lithium hexafluorophosphate with a concentration c of 0.6 mol/L. The organic solvent included ethylene carbonate, ethyl methyl carbonate, and dimethyl carbonate in a mass ratio of 5: 2: 3. The additive included vinylene carbonate and fluoroethylene carbonate. A mass percentage of vinylene carbonate in the electrolyte was 3 wt%, and a mass percentage of the fluoroethylene carbonate in the electrolyte was 1.5 wt%.

Through measurement, the electrolyte had a viscosity µ of 1.74 mPa.s at 25°C, a density ρ of 1.2 g/cm³, and a conductivity σ of 8.06 ms/cm. The electrolyte satisfied the following relational expression: 23.1≤-15×c²+28.53×c+0.64×µ+16.47×ρ-σ≤25.3.

### Example 2

Example 2 differed from Example 1 merely in the concentration of the lithium salt. The lithium salt in Example 2 was lithium hexafluorophosphate with a concentration c of 0.7 mol/L. Through measurement, the electrolyte had a viscosity µ of 1.82 mPa.s at 25°C, a density ρ of 1.19 g/cm³, and a conductivity σ of 9.267 ms/cm. The electrolyte satisfied the following relational expression: 23.1≤-15×c²+28.53×c+0.64×µ+16.47×ρ-σ≤25.3.

### Example 3

Example 3 differed from Example 1 merely in the concentration of the lithium salt. The lithium salt in Example 3 was lithium hexafluorophosphate with a concentration c of 0.8 mol/L. Through measurement, the electrolyte had a viscosity µ of 1.91 mPa.s at 25°C, a density ρ of 1.2 g/cm³, and a conductivity σ of 9.974 ms/cm. The electrolyte satisfied the following relational expression: 23.1≤-15×c²+28.53×c+0.64×µ+16.47×ρ-σ≤25.3.

### Example 4

Example 4 differed from Example 1 merely in the concentration of the lithium salt. The lithium salt in Example 4 was lithium hexafluorophosphate with a concentration c of 0.9 mol/L. Through measurement, the electrolyte had a viscosity µ of 2.25 mPa.s at 25°C, a density ρ of 1.2 g/cm³, and a conductivity σ of 10.57 ms/cm. The electrolyte satisfied the following relational expression: 23.1≤-15×c²+28.53×c+0.64×µ+16.47×ρ-σ≤25.3.

### Example 5

Example 5 differed from Example 1 merely in the concentration of the lithium salt. The lithium salt in Example 5 was lithium hexafluorophosphate with a concentration c of 1.0 mol/L. Through measurement, the electrolyte had a viscosity µ of 2.55 mPa.s at 25°C, a density ρ of 1.22 g/cm³, and a conductivity σ of 10.94 ms/cm. The electrolyte satisfied the following relational expression: 23.1≤-15×c²+28.53×c+0.64×µ+16.47×ρ-σ≤25.3.

### Example 6

Example 6 provided an electrolyte for an energy storage device. The electrolyte included lithium salt, an organic solvent, and an additive. The lithium salt was lithium hexafluorophosphate with a concentration c of 0.8 mol/L. The organic solvent included ethylene carbonate and ethyl methyl carbonate in a mass ratio of 2: 8. The additive included vinylene carbonate and fluoroethylene carbonate. A mass percentage of vinylene carbonate in the electrolyte was 3 wt%, and a mass percentage of fluoroethylene carbonate in the electrolyte was 1.5 wt%.

Through measurement, the electrolyte had a viscosity µ of 2.1 mPa.s at 25°C, a density ρ of 1.17 g/cm³, and a conductivity σ of 10.44 ms/cm. The electrolyte satisfied the following relational expression: 23.1≤-15×c²+28.53×c+0.64×µ+16.47×ρ-σ≤25.3.

### Example 7

Example 7 provided an electrolyte for an energy storage device. The electrolyte included lithium salt, an organic solvent, and an additive. The lithium salt had a concentration c of 1 mol/L, specifically including 0.9 mol/L of lithium hexafluorophosphate and 0.1 mol/L of lithium bis(fluorosulfonyl)imide. The organic solvent included ethylene carbonate, ethyl methyl carbonate, and dimethyl carbonate in a mass ratio of 3: 4: 3. The additive included vinylene carbonate and fluoroethylene carbonate. A mass percentage of vinylene carbonate in the electrolyte was 3 wt%, and a mass percentage of the fluoroethylene carbonate in the electrolyte was 1.5 wt%.

Through measurement, the electrolyte had a viscosity µ of 2.4 mPa.s at 25°C, a density ρ of 1.19 g/cm³, and a conductivity σ of 11.66 ms/cm. The electrolyte satisfied the following relational expression: 23.1≤-15×c²+28.53×c+0.64×µ+16.47×ρ-σ≤25.3.

### Comparative Example 1

Comparative Example 1 provided an electrolyte for an energy storage device. The electrolyte included lithium salt, an organic solvent, and an additive. The lithium salt has a concentration c of 1 mol/L, specifically including 0.9 mol/L of lithium hexafluorophosphate and 0.1 mol/L of lithium bis(fluorosulfonyl)imide. The organic solvent included ethylene carbonate and diethyl carbonate in a mass ratio of 7:3. The additive included vinylene carbonate and fluoroethylene carbonate. A mass percentage of vinylene carbonate in the electrolyte was 3 wt%. A mass percentage of fluoroethylene carbonate in the electrolyte was 1.5 wt%.

Through measurement, the electrolyte had a viscosity µ of 4.8 mPa.s at 25°C, a density ρ of 1.25 g/cm³, and a conductivity σ of 9.45 ms/cm. The electrolyte did not satisfy the following relational expression: 23.1≤-15×c²+28.53×c+0.64×µ+16.47×ρ-σ≤25.3.

### Comparative Example 2

Comparative Example 2 provided an electrolyte for an energy storage device. Comparative Example 2 differed from Example 6 merely in the organic solvent. In Comparative Example 2, the organic solvent included ethylene carbonate and ethyl methyl carbonate in a mass ratio of 1:9.

Through measurement, the electrolyte had a viscosity µ of 1.35 mPa.s at 25°C, a density ρ of 1.08 g/cm³, and a conductivity σ of 4.52 ms/cm. The electrolyte did not satisfy the following relational expression: 23.1≤-15×c²+28.53×c+0.64×µ+16.47×ρ-σ≤25.3.

### Comparative Example 3

Comparative Example 3 provides an electrolyte for an energy storage device. Comparative Example 3 differed from Example 6 merely in the organic solvent. In Comparative Example 3, the organic solvent included ethylene carbonate and ethyl methyl carbonate in a mass ratio of 6:4.

Through measurement, the electrolyte had a viscosity µ of 5.32 mPa.s at 25°C, a density ρ of 1.31 g/cm³, and a conductivity σ of 5.27 ms/cm. The electrolyte did not satisfy the following relational expression: 23.1≤-15×c²+28.53×c+0.64×µ+16.47×ρ-σ≤25.3.

### Comparative Example 4

Comparative Example 4 provided an electrolyte for an energy storage device. Comparative Example 4 differed from Example 6 merely in the organic solvent. In Comparative Example 4, the lithium salt was lithium hexafluorophosphate with a concentration c of 0.5 mol/L. Through measurement, the electrolyte had a viscosity µ of 1.68 mPa.s at 25°C, a density ρ of 1.18 g/cm³, and a conductivity σ of 6.75 ms/cm. The electrolyte satisfied the following relational expression: 23.1≤-15×c²+28.53×c+0.64×µ+16.47×ρ-σ≤25.3.

### Comparative Example 5

Comparative Example 5 provided an electrolyte for an energy storage device. Comparative Example 5 differed from Example 6 merely in the organic solvent. In Comparative Example 5, the lithium salt was lithium hexafluorophosphate with a concentration c of 1.1 mol/L. Through measurement, the electrolyte had a viscosity µ of 2.64 mPa.s at 25°C, a density ρ of 1.22 g/cm³, and a conductivity σ of 10.34 ms/cm. The electrolyte satisfied the following relational expression: 23.1≤-15×c²+28.53×c+0.64×µ+16.47×ρ-σ≤25.3.

It can be noted that for the electrolyte in the above Example 1 to Example 7 and Comparative Example 1 to Comparative Example 5, the conductivity was tested by a conductivity meter, and the viscosity was tested by an Ubbelohde viscometer. The environmental conditions for testing were 25±1°C temperature and ≤ 2% humidity (that is, the condition of a dry room). The density was tested by a density meter.

The values and calculation results of the relational expression of the concentration of the lithium salt and the viscosity, density, and conductivity of the electrolyte in Example 1 to Example 7 and Comparative Example 1 to Comparative Example 5 are shown in Table 1 below. When the calculation result of the relational expression is between 23 and 25.3, it is determined that the relational expression is satisfied. When the values of the lithium salt concentration, viscosity, density, and conductivity of the electrolyte were all within the ranges specified in the embodiments of the present disclosure and satisfied the relational expression, the electrolyte had superior electrical property, good process performance, and reasonable production cost.

**[Table 1] Table of parameters and relational expression of the electrolyte in Example 1 to Example 7 and Comparative Example 1 to Comparative Example 5**

| | Concentration of lithium salt (mol/L) | Viscosity µ (mPa.s) | Density ρ (g/cm³) | Conductivity σ (ms/cm) | Relational expression -15×c²+28.53×c+0.64×µ+16.47×ρ-σ |
|---|---|---|---|---|---|
| Example 1 | 0.6 | 1.74 | 1.2 | 8.06 | 24.5356 |
| Example 2 | 0.7 | 1.82 | 1.19 | 9.267 | 24.1181 |
| Example 3 | 0.8 | 1.91 | 1.2 | 9.974 | 24.2364 |
| Example 4 | 0.9 | 2.25 | 1.2 | 10.57 | 24.161 |
| Example 5 | 1 | 2.55 | 1.22 | 10.94 | 24.3154 |
| Example 6 | 0.8 | 2.1 | 1.17 | 10.44 | 23.3979 |
| Example 7 | 1 | 2.4 | 1.19 | 11.66 | 23.0053 |
| Comparative Example 1 | 1 | 4.8 | 1.25 | 9.45 | 27.7395 |
| Comparative Example 2 | 0.8 | 1.35 | 1.08 | 4.52 | 27.3556 |
| Comparative Example 3 | 0.8 | 5.32 | 1.31 | 5.27 | 32.9345 |
| Comparative Example 4 | 0.5 | 1.68 | 1.18 | 6.75 | 24.2748 |
| Comparative Example 5 | 1.1 | 2.64 | 1.22 | 10.34 | 24.676 |

The performance test of electrolyte is explained below.

(1) Test of infiltration effect and injection efficiency: the electrolyte prepared in above Example 1 to Example 7 and Comparative Example 1 to Comparative Example 5 was injected into a battery cell by using a vacuum injection method and a positive pressure injection method, respectively. The process of liquid injection specifically included: vacuuming and holding at -98 KPa for 60 seconds; pressurizing, holding at 600 KPa for 240 seconds, and holding at -98 KPa for 60 seconds; vacuum breaking for 20s. The process was referred to as a liquid injection cycle. The number of cycles required to infiltrate 50% of pores, 60% of pores, 70% of pores, and 80% of pores of the battery cell in each Example and each Comparative Example was measured, respectively. The detailed data is shown in Table 2 below.

**[Table 2] Test for infiltration performance of the electrolyte in Example 1 to Example 7 and Comparative Example 1 to Comparative Example 5**

| | Number of cycles required to infiltrate 50% of pores | Number of cycles required to infiltrate 60% of pores | Number of cycles required to infiltrate 70% of pores | Number of cycles required to infiltrate 80% of pores |
|---|---|---|---|---|
| Example 1 | 1 | 1 | 1 | 2 |
| Example 2 | 2 | 2 | 2 | 3 |
| Example 3 | 2 | 3 | 3 | 4 |
| Example 4 | 3 | 4 | 5 | 6 |
| Example 5 | 6 | 8 | 9 | 11 |
| Example 6 | 2 | 3 | 4 | 5 |
| Example 7 | 4 | 5 | 6 | 8 |
| Comparative Example 1 | 11 | 15 | 18 | 21 |
| Comparative Example 2 | 1 | 1 | 1 | 1 |
| Comparative Example 3 | 18 | 21 | 25 | 29 |
| Comparative Example 4 | 1 | 1 | 1 | 2 |
| Comparative Example 5 | 8 | 10 | 12 | 15 |

As can be seen from the results of the number of cycles required to infiltrate in each Example and each Comparative Example in Table 2, the number of cycles required to achieve the same infiltration effect is fewer when the viscosity of the electrolyte is lower. It indicates that the infiltration effect is better when indicating that the viscosity of the electrolyte is lower.

In addition, when the number of cycles required to infiltrate 80% of the pores is fewer, the injection efficiency is higher.

(2) A constant current charge and discharge test was performed at a temperature of 25°C and a current density of 1C. The number of cycles and a capacity retention rate of a battery using the electrolyte in Example 1 to Example 3 and Comparative Example 1 were measured. The test results are shown in FIG. 1. It should be noted that four curves from top to bottom in FIG. 1 correspond to the results of the cycle stability test results of Example 1, Example 2, Example 3, and Comparative Example 1, respectively.

The experimental results are described in detail below.

1. By comparing the experimental results of Example 1 to Example 5, it can be seen that the viscosity and the conductivity of the electrolyte both exhibit an upward trend with an increase in the concentration of the lithium salt. However, in combination with the experimental results in Comparative Example 5, it can be seen that, when the concentration of the lithium salt continues to increase, the viscosity of the electrolyte continues to increase, but the conductivity decreases, rather than increasing, with the increase of the lithium salt. It can be seen that, the concentration of the lithium salt in the electrolyte has a preferred range, and it is not true that the concentration of the lithium salt concentration should be as great as possible.

2. By comparing the experimental results of Example 1 to Example 3 and Comparative Example 3, it can be seen that, although the electrolyte in Example 1 has the lowest conductivity, it has the best cycle stability performance. Although the conductivity of the electrolyte in Comparative Example 1 was between the conductivities of Example 2 and Example 3, the viscosity of the electrolyte in Comparative Example 1 was too high, resulting in a sharp decrease in cycle capacity, deteriorating infiltration effect on the electrode plate, and poor injection efficiency. It can be seen that the conductivity has a preferred range, and it is not true that the conductivity should be as great as possible. The cycle stability performance of the energy storage device is also affected by the viscosity of the electrolyte to some extent. In addition, Example 1 of the present disclosure still had a better cycle stability under low conductivity, indicating that the embodiments of the present disclosure can obtain an electrolyte having a low conductivity, good process performance and reasonable production cost while the electrical performance of the electrolyte is improved.

3. By comparing the experimental results of Example 1 to Example 7, it can be seen that the number of cycles required to infiltrate the pores of the battery cell increases with an increase in the viscosity of the electrolyte, indicating that both the infiltration performance and the injection efficiency (i.e., the process performance) gradually decrease. When taking the process performance, the cycle stability, and the production cost together into consideration, Example 1 to Example 3 had better overall performance, and Example 1 had the best performance.

In addition, by further analyzing the experimental results of Comparative Example 1 to Comparative Example 3, it can be seen that the viscosity of the electrolyte in Comparative Example 1 and Comparative Example 3 was too high, and the number of cycles required to infiltrate the pores of the battery cell increased dramatically, indicating the important effect of the viscosity of the electrolyte on the process performance. The viscosity and density of the electrolyte in Comparative Example 2 were lower than the range of the embodiments of the present disclosure. Although the process performance thereof was good, the conductivity was too low, thereby resulting in poor electrical property of the electrolyte and still failing to satisfy the requirements of the electrolyte for better electrical property, good process performance, and reasonable production cost.

4. By comparing the experimental results of Example 1 to Example 7, Comparative Example 4, and Comparative Example 5, it can be seen that the conductivity in Comparative Example 4 was too low. Although the concentration of the lithium salt, density and viscosity of the electrolyte and the relational expression all satisfied the ranges specified in the embodiments of the present disclosure, the charge and discharge rate characteristics of the energy storage device were still affected due to the excessively low conductivity. In Comparative Example 5, the process performance of the electrolyte deteriorates due to the great concentration of the lithium salt and the great viscosity of the electrolyte.

The electrolyte, energy storage device, energy storage module, and electric apparatus disclosed in the embodiments of the present disclosure are described in detail above. Specific examples are described herein to illustrate the principles and embodiments of the present disclosure. The description of the above examples is only used to help understanding the core ideas of the technical solutions of the present disclosure. At the same time, for those of ordinary skill in the art, there will be changes in the specific embodiments and application scope based on the concept of the present disclosure. In summary, the content of the description should not be construed as limitations on the present disclosure.

## Claims

1. An electrolyte for an energy storage device, wherein the electrolyte satisfies the following relational expression: 23.1≤-15×c²+28.53×c+0.64×µ+16.47×ρ-σ≤25.3,where:
c is a value of a concentration of lithium salt in the electrolyte, the concentration of the lithium salt ranging from 0.6 mol/L to 1 mol/L;
µ is a value of a viscosity of the electrolyte at 25°C, the viscosity of the electrolyte at 25°C ranging from 1.6 mPa.s to 3.0 mPa.s;
ρ is a value of a density of the electrolyte, the density of the electrolyte ranging from 1.1 g/cm³ to 1.3 g/cm³; and
σ is a value of a conductivity of the electrolyte, the conductivity ranging from 8 ms/cm to 12 ms/cm.

2. The electrolyte according to claim 1, wherein the conductivity ranges from 8 ms/cm to 8.9 ms/cm.

3. The electrolyte according to any one of claims 1 to 2, wherein the electrolyte further comprises an organic solvent and an additive, where:
a mass percentage of the additive in the electrolyte ranges from 1 wt% to 8 wt%; and
a mass percentage of the organic solvent in the electrolyte ranges from 50 wt% to 95 wt%.

4. The electrolyte according to claim 3, wherein the lithium salt comprises at least one of lithium hexafluorophosphate, lithium bis(trifluoromethanesulfonyl)imide, lithium bis(fluorosulfonyl)imide, lithium tetrafluoroborate, lithium bis(oxalato)borate, or lithium difluoroxalate borate.

5. The electrolyte according to claim 3, wherein the organic solvent comprises a cyclic organic solvent and/or a linear organic solvent, and wherein:
when the organic solvent comprises the cyclic organic solvent, the cyclic organic solvent comprises at least one of ethylene carbonate, propylene carbonate, dioxolane, or sulfolane; and
when the organic solvent comprises the linear organic solvent, the linear organic solvent comprises at least one of dimethyl carbonate, diethyl carbonate, ethyl methyl carbonate, ethyl acetate, methyl acetate, propyl propionate, ethyl butyrate, ethyl propionate, 1,2-dimethoxyethane, diethylene glycol dimethyl ether, tetramethylsilane, or adiponitrile.

6. The electrolyte according to claim 5, wherein:
the organic solvent comprises the cyclic organic solvent and the linear organic solvent; and
a mass ratio of the cyclic organic solvent to the linear organic solvent ranges from 0.05 to 2.

7. The electrolyte according to claim 3, wherein the additive comprises at least one of vinylene carbonate, fluoroethylene carbonate, 1,3-propanesultone, vinyl sulfate, tris(trimethylsilyl)phosphate, tris(trimethylsilyl)borate, methylene methanedisulfonate, vinylethylene carbonate, lithium bisoxalate borate, lithium difluoroxalate borate, or lithium difluorophosphate.

8. An energy storage device, comprising the electrolyte according to any one of claims 1 to 7.

9. An energy storage module, comprising:
a container; and
the energy storage device according to claim 8 arranged in the container.

10. An electric apparatus, comprising:
an electric apparatus body; and
the energy storage device according to claim 8 arranged in the electric apparatus body, the energy storage device being configured to supply power to the electric apparatus body.
